# EUROPÄISCHE PATENTANMELDUNG

(11) **EP 2 100 766 A1**
(43) Veröffentlichungstag der Anmeldung: **16.09.2009**
(21) Anmeldenummer: 08102609.8
(22) Anmeldetag: 14.03.2008
(51) Int. Cl.: B60P 3/10, B63C 13/00

(54) **Hilfseinrichtung zum Beladen eines Boottrailers**

(71) Anmelder: Niederberger, Thomas, 6375 Beckenried (CH)
(72) Erfinder: Niederberger, Thomas, 6375 Beckenried (CH)
(74) Vertreter: Kemény AG Patentanwaltbüro

(57) **Zusammenfassung**

Die erfindungsgemässe Hilfseinrichtung (5), welche auf einem Bootstrailer zu montieren ist, besteht im Wesentlichen aus einem Grundgestell (8) mit Befestigungsmitteln, einer Führungseinrichtung für den Bug eines Bootes mit stehenden Führungsplatten (6,7), welche vom Boot überfahren gegen eine Federkraft niedergedrückt werden können und einer Kupplungsvorrichtung (9), mit welcher der Bug eines Bootes am Grundgestell (8) angeordnet ist, um nach dem Ankuppeln über ein Zugseil eine Winde (4) über die Führungseinrichtung hinaus das Boot in eine gewünschte Endstellung auf den Trailer zu ziehen.

## Beschreibung

Die vorliegende Erfindung betrifft eine Hilfseinrichtung zum Aus-/Einwassern und Auf-/Abladen eines Bootes auf einen Trailer, welche Einrichtung dazu vorgesehen ist auf einem Trailer montiert zu werden.

Es ist bekannt, dass kleinere bis mittlere Bote auf sog. Trailern nicht nur an ausgewählte Standorte transportiert werden, sondern dass diese Boote mittels der Trailer auch ein- bzw. ausgewassert werden, indem der Trailer vom Ufer aus soweit ins Wasser gefahren wird (z.B. über einen Slip), bis ein Boot ab- oder aufgeladen werden kann (wird dann vom Wasser getragen). Bei diesem Schritt wird ein Boot mittels einer Winde und einem Drahtseil zu Wasser gelassen bzw. aus dem Wasser auf den Trailer gezogen.

Für das Aus- oder Einwassern eines Bootes sind in der Regel zwei Personen erforderlich: Ein Boot muss mit einem Haken der Winde verbunden bzw. von diesem gelöst werden. Zudem sind weitere Manipulationen erforderlich.

Aufgabe der vorliegenden Erfindung ist es eine Hilfseinrichtung für einen Bootstrailer zu schaffen, mit welcher das Auf- bzw. Abladen eines Bootes von einem Trailer durch eine einzige Person bewerkstelligt werden kann, wobei zu beachten ist, dass wegen der unmittelbaren Nähe des Wassers bei den genannten Operationen die Einrichtung ohne Einsatz von elektrischem Strom auskommen muss.

Diese Aufgabe wird bei einer Einrichtung der Eingangs definierten Art erfindungsgemäss durch die Merkmale des kennzeichnenden Teils von Anspruch 1 gelöst.

Besonders vorteilhafte Ausführungsformen des Erfindungsgegenstandes sind in den abhängigen Ansprüchen definiert.

Die Erfindung wird nachstehend anhand eines in der Zeichnung dargestellten Ausführungsbeispiels noch etwas näher erläutert. Es zeigt:
Fig. 1 eine Draufsicht auf einen rein schematisch dargestellten Bootstrailer, ausgerüstet mit einer Einrichtung nach der Erfindung;
Fig. 2. zeigt den Bootstrailer von Fig. 1 im Schnitt entlang der Linie II-II;
Fig. 3 in Draufsicht einen vergrösserten Ausschnitt aus Fig. 1 zeigend die erfindungsgemässe Einrichtung;
Fig. 4. zeigt schematisch und als Ausschnitt den Bug eines Bootes mit einem Auge zum Anbringen eines Zugseils,
Fig. 5. rein schematisch das Auge am Bug eines Bootes gekuppelt mit dem Verschluss an der Kupplungsvorrichtung (teilweise im Schnitt) und
Fig. 6 und 7 schematisch eine weitere Ausführungsvariante einer Kupplungsvorrichtung in offener und geschlossener Position.

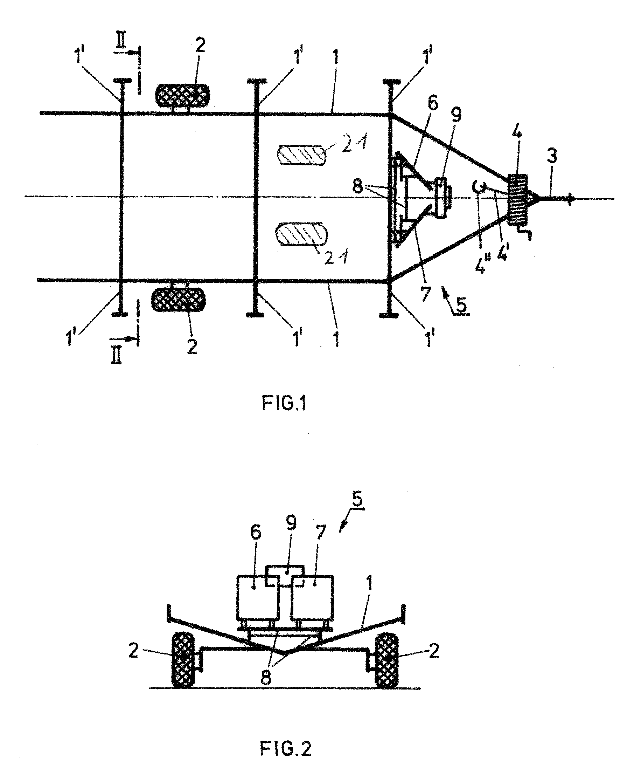

Aus dem Schema von Figur 1 ist ein Trailer 1, mit Rädern 2 und Anhängedeichsel 3 ersichtlich. Im vordersten Teil (bei bzw. an der Deichsel 3) ist eine Seilwinde 4 angebracht, mit welcher ein Zugseil 4' mit Anhängehaken 4" von Hand (Kurbel) oder motorisch auf- bzw. abgerollt werden kann, um ein angehängtes Boot (nicht dargestellt) auf den Trailer zu ziehen oder von diesem abgesenkt und eingewassert zu werden.

Neben den üblichen Trägern 1' für das seitliche Führen und Halten eines Bootes ist der Trailer im vorderen Drittel mit der erfindungsgemässen Hilfseinrichtung 5 ausgerüstet.

Die Hilfseinrichtung 5 besteht aus einem Grundgestell 8 und daran befestigten stehenden Führungsplatten 6,7 um den Bug eines Bootes und ein Kupplungsauge am Bug des Bootes in eine Kupplungsvorrichtung 9 zu führen, welche lösbar am Grundgestell 8 angeordnet ist:

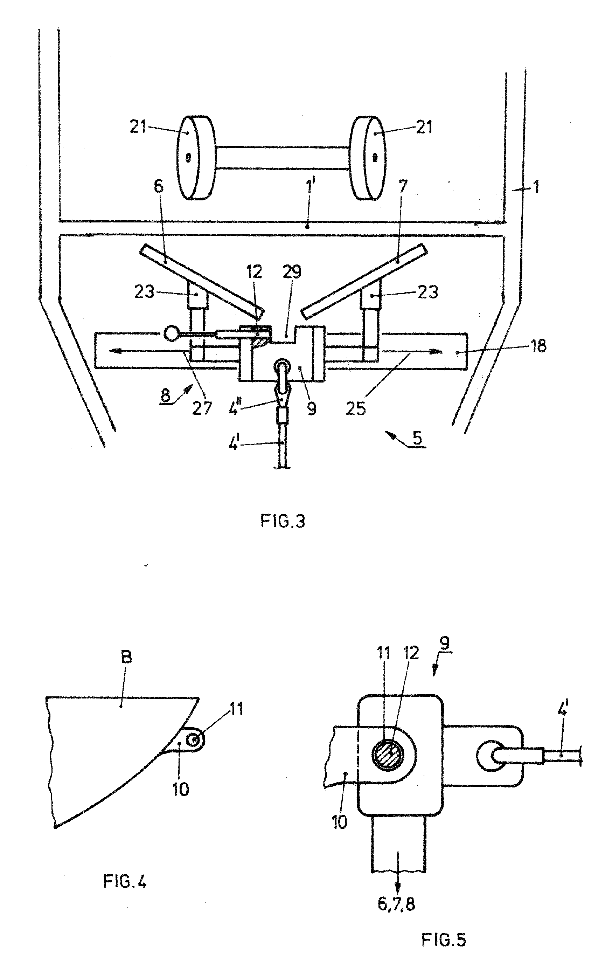

Sobald der Schiffsbug mit dem Auge 11 (Fig. 4) in die Kupplungsvorrichtung 9 eingefahren ist, wird der Verschluss (der Kupplung) betätigt und über mechanische Glieder die Kupplungsvorrichtung 9 vom Grundgestell 8 gelöst. Die Vorrichtung 9 ist mit dem Zugseil 4' der Seilwinde 4 verbunden und das Boot kann in die gewünschte Endstellung aufgezogen werden (oder aus dieser abgelassen werden).

Das Aufziehen eines Bootes mittels der erfindungsgemässen Hilfseinrichtung 5 wird unter Bezug auf die Figuren 1 bis 5 detailliert beschrieben. Der mindestens teilweise an einem Ufer im Wasser stehende Trailer wird von einem Boot angesteuert und zunächst beim Einfahren mittels der beiden Laufrollenführungen 21 Richtung Hilfseinrichtung 5 gesteuert. Da die Hilfseinrichtung 5, wie insbesondere aus Figur 3 erkennbar und mittels Pfeilen 25 + 27 angedeutet, auf einem Querbalken 18 seitlich verschiebbar angeordnet ist, ist ein genau zentriertes Einfahren durch das Boot nicht zwingend notwendig. Dies aufgrund der Tatsache, dass die Führungsplatten 6 und 7 rechts oder links aus der Mitte geschoben werden können, womit das genaue Zentrieren der Einrichtung mind. teilweise durch den Bug erfolgen kann. Beim Einfahren des Schiffes werden nun diese Führungsplatten 6 und 7 überfahren, womit der obere Teil der Hilfseinrichtung 5 zusammen mit der Kupplungsvorrichtung 9 selbsttätig in die Mitte des Schiffsbuges verschoben wird. Beim Überfahren der Führungseinrichtung werden die Platten gegen eine Federkraft, wie beispielsweise die beiden in Figur 3 erkennbaren Gaszylinder 23, nach unten gedrückt. Damit wirkverbunden bzw. beim Einfahren des Auges 11 vom Schiffsbug in die Aufnahme 29 der Kupplungsvorrichtung 9 löst sich diese vom Grundgestell 8 und wird mittels einer Verriegelung 12 fest mit der Kupplungsvorrichtung 9 verbunden. Schliesslich kann das Boot vollständig auf den Trailer mittels dem Zugseil 4' durch die Seilwinde 4 in die gewünschte Endstellung aufgezogen werden. Dies kann sowohl mechanisch, mittels Handkurbel, wie auch motorgetrieben erfolgen.

Der grosse Vorteil der erfindungsgemäss beschriebenen Hilfseinrichtung liegt einerseits darin, dass ein genaues Auffahren mit dem Schiff auf den Trailer infolge der beiden Führungsplatten nicht notwendig ist, da diese selbsttätig in die richtige Position durch den Schiffsbug getrieben werden und damit eine genaue Ankopplung an die Kupplungsvorrichtung erfolgt. Ein weiterer Vorteil liegt darin, dass sich die Kupplungsvorrichtung automatisch von der Hilfseinrichtung bzw. dem Grundgestell mit den Führungsplatten löst, damit das endgültige Aufziehen des Schiffes ermöglicht wird.

Die meisten Teile der Hilfseinrichtung 5 können aus Leichtmetall, wie z.B. Aluminium gefertigt sein. Die Führungsplatten 6,7 bestehen z.B. aus einem wenigstens nahezu elastischen Material oder sind mit einem derartigen Material überzogen bzw. gepolstert. Geeignet sind beispielsweise Kunststoffmaterialien welche eine hohe Wasserresistenz aufweisen und welche über eine hohe Abriebfestigkeit verfügen.

Die Hilfseinrichtung 5 erlaubt ein Boot auf den Trailer auf- bzw. von diesem abzuladen, wobei dazu lediglich eine Bedienungsperson erforderlich ist.

Die erfindungsgemässe Einrichtung erlaubt das Boot sehr früh mit dem Zugseil zu verbinden. Ein Boot kann somit auch bei geringer Wassertiefe auf den Tailer gebracht werden.

Eine Auswasserung bzw. das Aufladen eines Bootes auf einen Trailer läuft etwa wie folgt ab:
- ein Trailer mit montierter Hilfseinrichtung (mit Zugfahrzeug) wird am Ufer in Stellung im Wasser gebracht, z.B. an einem Slip;
- das Boot wird zum Trailer gesteuert und fährt auf diesen auf, wobei der Bug mit Kupplungsauge in die Führungseinrichtung zwischen die beiden Führungsplatten gesteuert wird, wo eine automatische Ankupplung an die Kupplungsvorrichtung erfolgt (welche ihrerseits über ein Zugseil mit der Winde verbunden ist);
- nach dem Ankuppeln wird auch die Kupplungsvorrichtung vom Grundgestell der Einrichtung automatisch gelöst, sodass das Boot, unter Überfahren und Niederdrücken der Führungsplatten, in die gewünschte Endstellung, noch weiter auf den Trailer gezogen werden kann.

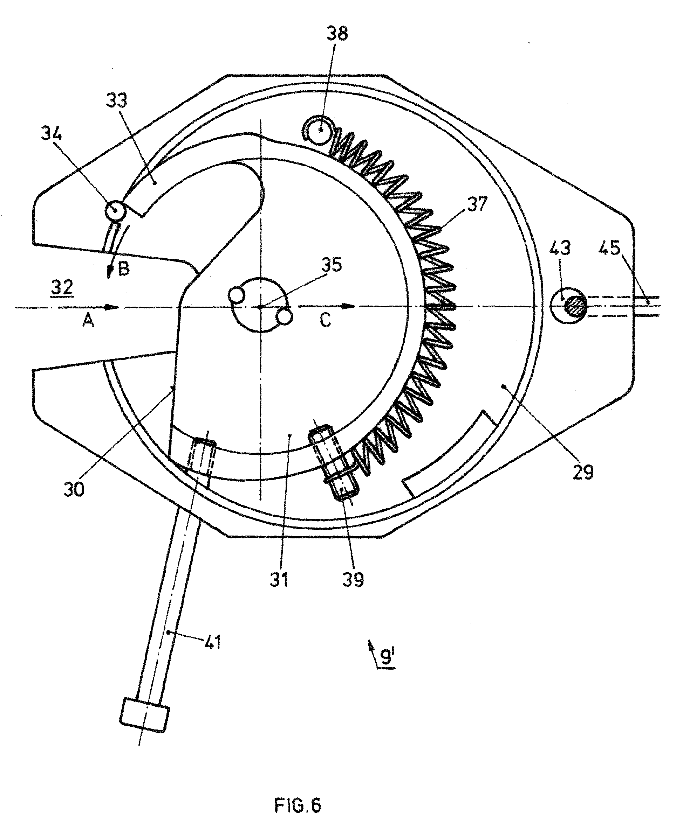

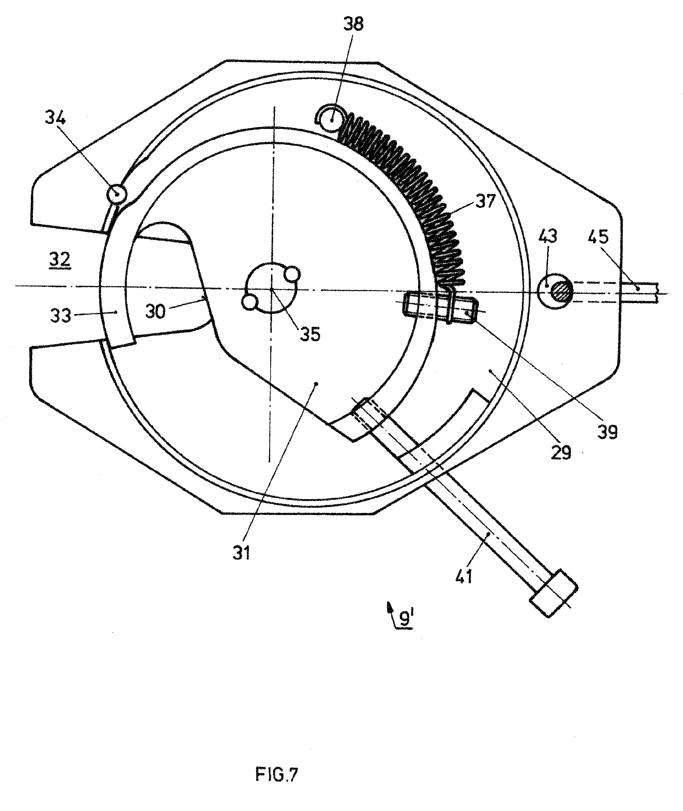

Fig. 6 und 7 schliesslich zeigen eine spezielle Ausführungsvariante der Kupplungsvorrichtung 9', aufweisend eine im Wesentlichen kreisrunde Aufnahme 29 mit einer eingelegten Scheibe 31, welche um einen Drehpunkt 35 rotierbar ist. Frontseitig weist die Aufnahme 29 eine Öffnung 32 auf, durch welche hindurch das Kupplungsauge 11 (Fig. 4) eines Bootes in Pfeilrichtung A auf eine Frontpartie 30 der scheibenartigen Einlage 31 auflaufen bzw. anstossen kann. Die scheibenartige Einlage 31 weist einen einseitig vorstehenden Haken 33 auf, welcher an einem Arretiernocken 34 ansteht. Die scheibenartige Einlage 31 ist mittels einer Feder 37 in der kreisrunden Aufnahme vorgespannt angeordnet, wobei die Feder zwischen einem Haltestift 38 in der Aufnahme und einem weiteren Haltestift 39 an der scheibenartigen Einlage gehalten wird.

Wie aus der Darstellung in Fig. 6 deutlich erkennbar, ist die Feder 37 gespannt und der Haken 33 wird durch den Arretiernocken 34 an einer Schliessbewegung in Pfeilrichtung B gehindert.

Wenn nun das Boot mit dem Kupplungsauge durch die Öffnung 32 einfährt und an der Frontkante 30 der scheibenartigen Einlage 31 anstösst, wird die Scheibe und damit der Drehpunkt 35 in Pfeilrichtung C bewegt. Dies ist möglich, indem der Drehpunkt 35 federgelagert in der kreisrunden Aufnahme 29 angeordnet ist. Sobald die Bewegung der scheibenartigen Einlage 31 in Pfeilrichtung C ausreichend ist, kann der Haken 33 in Pfeilrichtung B das Kupplungsauge umschliessen und damit das Boot an der Kupplungsvorrichtung 9' halten. Die Schliessposition der Kupplungsvorrichtung 9' ist in Fig. 7 dargestellt, bei welcher der Haken 33 vollständig die Öffnung 32 überragt. Entsprechend ist in dieser geschlossenen Stellung die Feder 37 weitgehendst entspannt.

Nach Ankopplung wird die Kupplungsvorrichtung 9' vom Grundgestell freigegeben, wie unter Bezug auf die vorangehenden Figuren ausführlich beschrieben. Mittels eines Zugseiles 45, welches in einer Lochung 43 der Kupplungsvorrichtung 9' gehalten ist, kann das Boot nun durch eine Seilwinde vollständig auf einen Trailer gezogen werden.

Um ein Kupplungsauge eines Bootes wieder frei zu geben, kann die scheibenartige Einlage mittels einem Spannbolzen 41 wieder gespannt werden, bis der Haken 34 durch den Arretiernocken festgehalten wird und das Kupplungsauge frei ist.

Die Kupplungsvorrichtung 9' wie dargestellt in den Figuren 6 und 7 hat den Vorteil, dass ein automatisches Ankoppeln des Auges des Schiffsbuges erfolgt und somit das Verriegeln durch eine Person entfällt.

Bei den in den Fig. 1 bis 7 dargestellten Ausführungsbeispielen der erfindungsgemässen Hilfseinrichtung handelt es sich selbstverständlich nur um Beispiele, welche x-beliebig abgeändert, ergänzt oder modifiziert werden können. Zum Beispiel die Ausgestaltung der Führungsplatten kann unterschiedlich sein und beispielsweise an die Bugform eines Schiffes angepasst sein. So können diese Führungsplatten abgerundet, gewölbt oder gerade plattenartig wie in den Figuren dargestellt sein. Auch die diversen zu verwendenden Materialien sind lediglich beispielsweise beschrieben und die endgültige Wahl erfolgt beispielsweise aufgrund der Anforderungen und ist schliesslich auch eine Kostenfrage.

## Patentansprüche

1. Hilfseinrichtung zum Aus-/Einwassern und Auf-/Abladen eines Bootes auf einen Trailer, welche Einrichtung dazu vorgesehen ist auf einem Trailer montiert zu werden, **gekennzeichnet durch**:
- ein Grundgestell mit Mitteln zu dessen lösbarer Befestigung im vorderen Teil eines Trailers;
- eine mittels einer Halterung am Grundgestellt angeordnete Führungseinrichtung für den Bug eines Bootes, welche kippbar vom Boot überfahrbar ist und welche im wesentlichen querverschieblich zum Boot bzw. Trailer am Grundgestell gelagert ist.
- eine Kupplungsvorrichtung, lösbar an der Führungseinrichtung angeordnet, welche einerseits einen Verschluss für das Ankuppeln an einem Auge eines aufzuladenden Bootes aufweist und andererseits mit einem Zugseil verbindbar ist, über welches mittels einer Winde ein angekuppeltes Boot auf den Trailer gezogen wird, wobei sich nach dem Ankuppeln eines Bootes die Kupplungsvorrichtung von der Führungseinrichtung lösbar ist derart, dass beim Aufziehen eines Bootes die Einrichtung beim Überfahren **durch** das Boot gegen eine Federkraft kippbar und niederdrückbar ist damit das Boot in die Endstellung weitergezogen werden kann.

2. Hilfseinrichtung nach Anspruch 1, **dadurch gekennzeichnet, dass** die Führungseinrichtung im wesentlichen zwei abgewinkelte zueinander angeordnete im wesentlichen stehende plattenartige Elemente aufweist, vorzugsweise aus mindestens teilweise elastischem Material oder aufweisend eine Polsterung oder einen Überzug aus einem solchen Material wie beispielsweise Kunststoffplatten, welche durch das Gewicht eines auffahrenden Bootes beim Überfahren in eine den Bootsrumpf abstützende Stellung federnd niederdrückbar sind.

3. Hilfseinrichtung nach Anspruch 1 oder 2, **dadurch gekennzeichnet, dass** die Kupplungsvorrichtung mit der Führungseinrichtung wirkverbunden ist, derart, dass das Lösen der Kupplungsvorrichtung von der Führungseinrichtung automatisch erfolgt z.B. über eine Mechanik, sobald ein Boot angekuppelt ist.

4. Hilfseinrichtung nach einem der Ansprüche 1 bis 3, **dadurch gekennzeichnet, dass** die federnde Abstützung der Führungseinrichtung über Gasdruckzylinder erfolgt.

5. Hilfseinrichtung nach einem der Ansprüche 1 bis 4, **dadurch gekennzeichnet, dass** die Führungseinrichtung wie insbesondere die plattenartigen Elemente zur Trailerlängsrichtung querverschieblich angeordnet sind, um beim Einfahren eines Bootes die Kupplungsvorrichtung richtig zu positionieren für das Ankoppeln des Auges an der Kupplungsvorrichtung.

6. Hilfseinrichtung nach einem der Ansprüche 1 bis 5, **dadurch gekennzeichnet, dass** Laufrollenführungen vorgesehen sind, für das zentrierte Einfahren eines Bootes.

7. Hilfseinrichtung nach einem der Ansprüche 1 bis 6, **dadurch gekennzeichnet, dass** die Hilfseinrichtung eine Kupplungseinrichtung aufweist mit einer federvorgespannten Scheibe mit Haken, aufweisend eine Öffnung in Richtung aufzuziehendem Schiffsbug, wobei beim Einfahren eines Ankupplungsauges des Schiffes in die Öffnung, die Feder derart auslösbar und damit die Scheibe mit Haken drehbar ist um das Auge am Schiffsbug zu umschliessen.

8. Verfahren zum Aus-/Einwassern und Auf-/Abladen eines Bootes mittels einer Hilfseinrichtung nach einem der Ansprüche 1 bis 7, **dadurch gekennzeichnet, dass** zunächst das Boot in Bugvorwärtsrichtung zum und auf den Trailer gesteuert und eingefahren wird, durch Anstossen auf die Führungseinrichtung diese bezüglich der Bugspitze zentriert, wodurch ein am Bug angeordnetes Ankupplungsauge in eine Kupplungsvorrichtung der Hilfseinrichtung zwecks Ankupplung des Bootes eingeführt wird, worauf die Kupplungsvorrichtung von der Führungsvorrichtung abgekoppelt wird, damit das Boot weiter mittels einem Zugseil und Winde auf den Trailer aufgezogen werden kann.
